# EUROPEAN PATENT APPLICATION

(11) **EP 4 749 764 A1**
(43) Date of publication of application: **27.05.2026**
(21) Application number: 24215430.0
(22) Date of filing: 26.11.2024
(51) Int. Cl.: H01M 10/613, H01M 10/625, H01M 10/6557, H01M 10/6556, H01M 10/6567, H01M 10/04

(54) **BATTERY SYSTEM, ELECTRIC VEHICLE AND COOLING PLATE**

(71) Applicant: SAMSUNG SDI CO., LTD., Yongin-si, Gyeonggi-do 17084 (KR)
(72) Inventor: BLODER, Martin, 8261 Sinabelkirchen (AT)
(74) Representative: Gulde & Partner

(57) **Abstract**

The present disclosure refers to a battery system, an electric vehicle including the battery system and a cooling plate (12) for the battery system.

The battery system (100) includes a plurality of battery cells (10) stacked along a stacking direction (S) and at least one cooling plate (12) arranged between two adjacent battery cells (10) of the plurality battery cells (10) along the stacking direction (S). The cooling plate (12) includes a chamber (14) for cooling liquid with a deformation structure (16) configured to transfer compressive forces along the stacking direction (S) between opposite sides of the cooling plate (12) facing the adjacent battery cells (10). The deformation structure (16) is configured to equalize compressive forces caused by length deviations of the plurality of stacked battery cells (10) along the stacking direction (S) through deformation of at least a portion of the deformation structure (16) at a substantially constant force over a given displacement.

## Description

### Field of the Disclosure

The present disclosure relates to a battery system, an electric vehicle including the battery system and a cooling plate for the battery system.

### Technological Background

Recently, vehicles for transportation of goods and peoples have been developed that use electric power as a source for motion. Such an electric vehicle is an automobile that is propelled permanently or temporarily by an electric motor using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed either in a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

Conventional battery systems include coolers on their top or below their bottom as well as thermal barriers, so called cell spacers, between the battery cells to regulate excessive heat generated during charging or discharging of the battery cells. Such an arrangement is expensive but achieves good cooling and thermal propagation characteristics. However, the (inevitable) thickness tolerances of the cell spacers as well as of the battery cells lead to drastically varying pre-tensions on the battery cell stack which may cause a bad performance of the battery system. In order to handle the drawbacks due to the varying pre-tensions of the battery cell stack costly space- and/or time-consuming measures for the battery cell stack length deviation compensation is required in series production.

It is thus an object of the present invention to provide a battery system with good cooling and thermal propagation characteristics at low cost.

### Summary of Invention

The invention is defined by the appended claims. The description that follows is subjected to this limitation. Any disclosure lying outside the scope of the claims is only intended for illustrative as well as comparative purposes.

According to an embodiment, a battery system is provided. The battery system includes a plurality of battery cells stacked along a stacking direction and at least one cooling plate arranged between two adjacent battery cells of the plurality battery cells along the stacking direction. The cooling plate includes a chamber for cooling liquid with a deformation structure configured to transfer compressive forces along the stacking direction between opposite sides of the cooling plate facing the adjacent battery cells. The deformation structure is configured to equalize compressive forces caused by length deviations of the plurality of stacked battery cells along the stacking direction through deformation of at least a portion of the deformation structure at a substantially constant force over a given displacement.

According to another aspect of the present disclosure, an electric vehicle including the battery system is provided.

Yet another aspect of the present disclosure refers to a cooling plate for a battery system including a plurality battery cells stacked along a stacking direction, the cooling plate including a chamber for cooling liquid with a deformation structure configured to transfer compressive forces between opposite sides of the cooling plate. The deformation structure is configured to equalize compressive forces causable by length deviations of stacked battery cells along the stacking direction through deformation of at least a portion of the deformation structure at a substantially constant force over a given displacement.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a schematic diagram of a progressive force to displacement characteristic of a battery cell stack in the prior art.
- FIG. 2: illustrates a schematic diagram of a progressive force to displacement characteristics of a battery cell stack according to an embodiment.
- FIG. 3: illustrates a schematic top view on a battery system according to an embodiment.
- FIG. 4A: illustrates a cross-sectional view on a cooling plate according to an embodiment in a non-compressed state.
- FIG. 4B: illustrates a cross-sectional view on the cooling plate of FIG. 3A in a partially-compressed state.
- FIG. 4C: illustrates a cross-sectional view on the cooling plate of FIG: 3A in a fully-compressed state.
- FIG. 5: illustrates a perspective view on the coolant collector of the battery system.
- FIG. 6: illustrates a perspective view on the coolant collector of FIG. 5 arranged inside a hollow frame profile.
- FIG. 7: illustrates a schematic top view on a battery system according to another embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells stacked along a stacking direction (battery cell stack) and at least one cooling plate arranged between two adjacent battery cells of the plurality battery cells along the stacking direction. The cooling plate includes a chamber for cooling liquid with a deformation structure configured to transfer compressive forces along the stacking direction between opposite sides of the cooling plate facing the adjacent battery cells. The deformation structure is configured to equalize compressive forces caused by length deviations of the plurality of stacked battery cells along the stacking direction through deformation of at least a portion of the deformation structure at a substantially constant force over a given displacement.

Conventional battery cell stacks include battery cells as well as cell spacers featuring a progressive force to displacement ratio due to the material and conventional design properties. A disadvantage of such progressive characteristics is the susceptibility to length or positioning deviations, as a small displacement will cause a steep increase or decrease of force applied on the cell stack, which in turn reduces the stacks performance significantly. To mitigate these drawbacks, very strict and expensive production tolerances have to be met, or other costly and intricate ways of adjusting the cell stacks pre-tension positioning during production have to be implemented.

The general idea of the present disclosure thus relies on the concept according to which an ideal battery cell stack should have a deformation characteristic, which results in very similar compression forces independent of the cell stacks length deviations, caused by production tolerances and/or swelling of the battery cells, for example. In other words, a deformation at a substantially linear force to displacement ratio is desirable to maintain the performance of the battery system high.

One key to such a behavior may lie in the inner structure of the cooling plate. The deformation structure may include partition walls between both opposite sides of the cooling plate which do not provide a direct load path for transferring the compression forces. Instead, the partition walls of the deformation structure include at least one deflecting portion, i.e. in which at least a part of a partition wall of the deformation structure deflects due to the compression force acting along the stacking direction. In other words, a part of the compression force is used for deflection of the deformation structure, thereby mitigating and/or compensating a progressive force to displacement behavior. In other words, the deflection allows a movement or displacement path of the cooling plate along the stacking direction when a compression force caused by length deviations of the plurality of stacked battery cells along the stacking direction acts on the cooling plates.

In other words, if the cooling plate of the present disclosure is compressed within an operational pressure range of the battery cells along the stacking direction, the compression pressure remains constant or increases only slightly due to a plastic deformation of the deformation structure. Thus, the deformation structure is configured to absorb compressive forces caused by length deviations of the plurality of stacked battery cells.

Advantageously, due to the plastic deformation of the cooling plates to compensate for battery cell thickness tolerances may be compensated such that a simplicity in production may be achieved. Accordingly, no (or at least less) length and/or pressure adjustment along the stacking direction is required and the battery cell stack can be compressed and fixed at a standard size which will automatically result in the desired pressure range.

In other words, due to the plastic deformation of the cooling plate, a tolerance related varying net battery cell stack length, i.e. a length without the cooling plate, from battery cell stack to battery cell stack can be compensated to achieve the same total battery cell stack length, i.e. a length including the cooling plate, for all battery cell stacks (or modules) of a battery pack at same pressures for all battery cells of the battery cell stacks. Despite the fact that the battery cells may include different lengths along the stacking direction, e.g. due to production tolerances of the electrochemically active materials inside of the battery cell housings, the combined length and pressure equalization is enabled by the plastic deformation properties of the cooling plate.

Although the battery system with merely one cooling plate is described, the present disclosure is not limited thereto. The battery system may also include a plurality of cooling plates as described herein. For example, a cooling plate may be arranged between each two adjacent battery cells of the battery cell stack. However, the present disclosure is not limited thereto and a cooling plate may be arranged between some of the adjacent battery cells of the battery cell stack, only.

According to one embodiment, the deformation structure may be configured to deform along the stacking direction for at least 2.5 percent and/or for at most 10 percent of the length of a battery cell at a substantially constant force over a given displacement. The deformation structure may be configured to deform along the stacking direction for at least 3.3 percent and/or for at most 7.5 percent of the length of a battery cell at a substantially constant force over a given displacement. The deformation structure may be configured to deform along the stacking direction for substantially 5 percent of the length of a battery cell at a substantially constant force over a given displacement. The length deviations may refer to production tolerances and/or swelling of the plurality of stacked battery cells, due to charging and discharging of the battery cells, for example. The length of the battery cell may refer to the intended production length of the battery cell, i.e. without production tolerances. An intended production length of one battery cell may be 30 mm and a (corresponding) production tolerance may be ± 0.5 mm, for example. A deformation path of the deformation structure between 2.5 percent and 10 percent according to this example may thus correspond to 0.75 mm to 3 mm. Accordingly, the deflecting portion of the deformation structure may be configured to deflect between 0.75 mm and 3 mm with respect to the stacking direction. The length of the battery cell may refer to the length of a single battery cells, e.g. one of the battery cells adjacent to the cooling plate. However, the length may also refer to a combined length of battery cells, i.e. the combined length of more than one battery cell, e.g. both battery cells adjacent to the cooling plate or any amount of battery cells of the battery cell stack, e.g. each of the battery cells of the battery cell stack. In other words, deformation structure may be configured to deform along the stacking direction within the described ranges with respect to two or more battery cells of the plurality of battery cells. In this case, the amount of cooling plates may be reduced, thereby reducing manufacturing and assembling cost of the battery system.

According to another embodiment, the cooling plate may include a plurality of the chambers for cooling liquid (as described herein) evenly distributed between the opposite sides of the cooling plate along a first direction perpendicular to the stacking direction. For example, the first direction refers to a height direction of the battery cells. In other words, the plurality of chambers may be evenly distributed along the height direction of the battery cells. In this case, the compression pressure along the stacking direction may be substantially distributed evenly between the battery cells such that distortion of the battery cells may not occur and a corresponding reduction of the performance thereof may be prevented.

According to another embodiment, the battery system may further include at least one coolant collector extending along the stacking direction. The coolant collector may be fluidly connected to the chamber of the cooling plate. The coolant collector may be arranged adjacent to the battery cell stack, e.g. in a direction perpendicular to the height direction and the stacking direction. In an embodiment, the battery system may include two coolant collectors extending along the stacking direction and being fluidly connected to the chamber of the cooling plate. The coolant collectors may be arranged on opposite sides with respect to the direction perpendicular to the height direction and the stacking direction. In other words, the coolant collectors may encompass the battery cell stack along the stacking direction. The coolant collectors may be fluidly connected with the chamber of the cooling plate via opposite end section of the cooling plate. For example, when a plurality of cooling plates and/or a cooling plate with a plurality of chambers is used, each of the chambers may be easily fluidly connected with the coolant collector/s. The coolant collector may be made as a single piece and/or may be made of or consist of a high-strength synthetic material such as fiber-reinforced plastic. The coolant collector may be formed by injection molding or a series of molding and joining operations such as welding or gluing.

According to another embodiment, the battery system may further include two opposite end plates arranged such that the plurality of battery cells is encompassed between both end plates along the stacking direction. The coolant collector may be mechanically coupled to the end plates in a load carrying manner. In other words, the end plates and the coolant collector/s may set a specified or predetermined length of the battery cell stack along the stacking direction such that compressing forces along the stacking direction may be caused due to length deviations of the battery cells. For example, the coolant collector/s may be used as part of a housing or frame of the battery system. The coolant collector/s may include latches with snap-fit elements arranged at the ends of the coolant collector/s to mechanically connect to the end plates. The snap-fit elements may be adapted to interlock with the end plates and/or to retain a position of the coolant collector/s with respect to the end plates. The end plates may be configured to provide a substantially even pressure distribution along the end surfaces of the battery cell stack along the stacking direction. The lateral end surfaces of the battery cell stack may be end surfaces arranged in parallel to the opposite sides of the cooling plate facing the adjacent battery cells. For example, the end plates may be configured to provide the substantially even pressure distribution through a convex outer shape with respect to the stacking direction and a substantially flat inner shape contacting with the outermost battery cell of the battery cell stack. In other words, a middle section of the end plates may extend further into the stacking direction and away from the battery cell stack than end sections of the end plates. Each of the end plates may be made as a single piece and/or may be made of or consist of a high-strength synthetic material such as fiber-reinforced plastic.

According to another embodiment, the coolant collector/s may include a channel for conducting cooling fluid. The channel may extend along the stacking direction. The coolant collector may further include a circumferential groove for receiving an end section of the cooling plate and for connecting the chamber of the cooling plate to the channel of the coolant collector. The circumferential groove may be configured to receive the end section of the cooling plate and/or to connect the chamber of the cooling plate to the channel of the coolant collector. The circumferential groove may extend along a height direction of the battery cells. In an embodiment, in which a plurality of cooling plates is used, the coolant collector may include a plurality of circumferential grooves. For example, the coolant collector may include one circumferential groove for each cooling plate corresponding to the position of the cooling plates in the assembled state of the battery system, respectively. Accordingly, the end sections of each of the cooling plates may be received and each of the chambers of the cooling plates may be fluidly connected to the channel of the coolant collector. The channel of the coolant collector may lead to an outside of the coolant collector, e.g. connected to a reservoir for cooling liquid outside of the coolant collector.

According to another embodiment, an end section of the cooling plate may be received in the circumferential groove of the coolant collector and the circumferential groove may be filled with a sealing material for sealing the fluid connection between the chamber of the cooling plate and the channel of the coolant collector. The sealing material may also have gluing properties such that a long-term coolant tightness as well as mechanical cohesion of the battery system may be achieved.

According to another embodiment, the stiffness of the cooling plate at the end section may be higher than at a section interposed between the adjacent battery cells. The increased stiffness prevents damage to the end section of the cooling plate due to a sealing pressure of the sealings. For example, the cooling plate may include inserts at the end sections which are configured to stiffen the cooling plate for resisting a sealing pressure of the sealings. Alternatively, the end sections of the cooling plate may be pressed in to enhance the stiffness or may be made from a stiffer material, e.g. a metal such as steel (in comparison to aluminum of the cooling plate, for example). In other words, the cooling plate may have a deformable midsection for tolerance and swelling compensation of the battery cells and a stiff end section to provide the necessary counterpressure for a reliable long-term sealing.

According to another embodiment, the coolant collector may include (further) snap fit means arranged at a lower ridge and/or upper ridge of the coolant collector. The snap fit means may be configured to be connectable to a frame and/or a top cover of the battery system. Accordingly, mechanical loads from the battery cells may get transferred to the battery packs frame through the coolant collectors snap fit elements.

According to another embodiment, a snap fit element may be arranged above and/or below the groove of the coolant collector. For example, a snap fit element may be arranged above and/or below each of the grooves of the coolant collectors. The snap fit element may be arranged directly above and/or below the groove of the coolant collector. As mechanical loads from the battery cells get transferred into the coolant collector where the cooling plate meets the coolant collector, it is advantageous to minimize the distance between the force input (cooling plate received in the groove) to the force output (snap-fit element).

According to another embodiment, the snap fit element arranged above and/or below the groove of the coolant collector may include a hole connected to the groove for inserting sealing material into the groove. The sealing material may then be easily arranged into the groove via the hole. For example, when both of the snap fit elements arranged above and below the groove include the hole, the sealing material may be applied from below into the hole of the lower snap fit element and the sealing material then rises to the top of the groove, covering all of the end section of the cooling plate and coolant collector along the groove, with excess sealing material exiting the groove via the hole in the upper snap fit element. The use of the hole in one or more of the snap fit elements for introducing sealing material into the groove facilitates the appliance of sealing material to ensure long-term coolant tightness as well as mechanical cohesion of the battery system.

According to another embodiment, the battery system further includes a frame with at least one hollow frame profile. The coolant collector may be arranged inside the hollow frame profile and connected to the cooling plate through an opening in the wall of the hollow frame profile. In case of a plurality of cooling plates, an opening corresponding to each cooling plate may be included into the wall of the hollow frame profile. The accommodation of coolant collectors inside the hollow frame profile allows to clear space of the battery system in order to decrease its size and/or to increase the energy density of the battery system. In an embodiment, two hollow frame profiles are used to accommodate both of the above-mentioned coolant collectors.

According to another embodiment, the battery system further includes another plurality of battery cells (i.e. a second plurality of battery cells with substantially the same features) stacked along the stacking direction and disposed next to the plurality of battery cells. The end plates may be configured to encompass both pluralities of battery cells along the stacking direction. In other words, multiple parallel battery cell stacks of the battery system may be compressed together along the stacking direction between one common pair of end plates to compress all of the battery cell stacks to the same length along the stacking direction with the same pressure. Differences due to tolerances of the battery cells may be compensated via the cooling plates. Accordingly, a reduction in performance of the battery system due to battery cell length deviations does not occur. The chambers of adjacent cooling plates may be fluidly connected to each other to form a common fluid channel through the chambers of the cooling plates of the adjacent battery cell stacks. The common fluid channel may be connected to the coolant collector(s).

Another aspect of the present disclosure pertains to an electric vehicle including the battery system as disclosed herein. The features and advantages described in view of the above-mentioned battery system may be analogously applied to the electric vehicle.

Yet another aspect of the present disclosure pertains to a cooling plate for a battery system including a plurality battery cells stacked along a stacking direction. The cooling plate may correspond to the cooling plate as described above in view of the battery system. The cooling plate includes a chamber for cooling liquid with a deformation structure configured to transfer compressive forces between opposite sides of the cooling plate. The deformation structure is configured to equalize compressive forces causable by length deviations of stacked battery cells along the stacking direction through deformation of at least a portion of the deformation structure at a substantially constant force over a given displacement. The features and advantages described in view of the cooling plate of the above-mentioned battery system may be analogously applied to the cooling plate for a battery system.

### Specific Embodiments

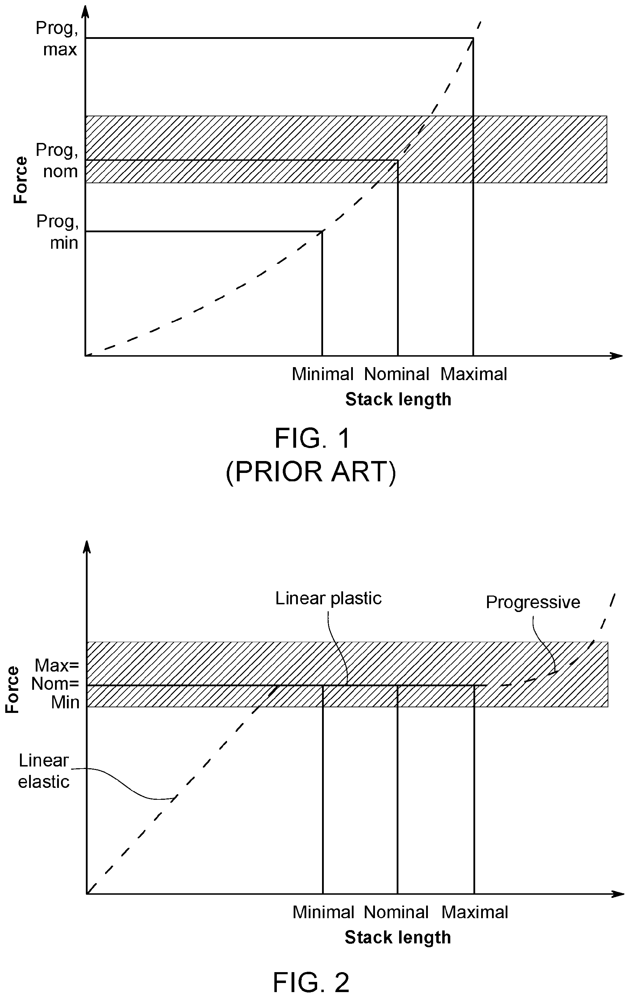

FIG. 1 is a schematic diagram illustrating a progressive force to displacement characteristics of a battery cell stack in the prior art. Conventional battery cell stacks include battery cells as well as cell spacers featuring a progressive force to displacement ratio due to the material and conventional design properties. A disadvantage of such progressive characteristics is the susceptibility to length or positioning deviations as a small displacement will cause a relatively steep increase or decrease of force applied on the battery cell stack, which in turn reduces the stacks performance significantly. For example, the stiffness of conventional battery cell stacks in a desired force range is too high, so that it is not possible to remain within the desired force range using conventional methods and tolerances in view of the prior art. As exemplarily shown in FIG. 1, the stack lengths between "minimal" to "nominal" substantially cause a rather small increase of force applied to the battery cell stack (see "prog. min" to "prog. nom.") compared to the stack lengths between "nominal" to "maximal" which cause a doubled increase of force applied to the battery cell stack (see "prog. nom" to "prog. max."). To mitigate these drawbacks, very strict and expensive production tolerances have to be met, or other costly and intricate ways of adjusting the battery cell stacks pre-tension positioning during production have to be implemented.

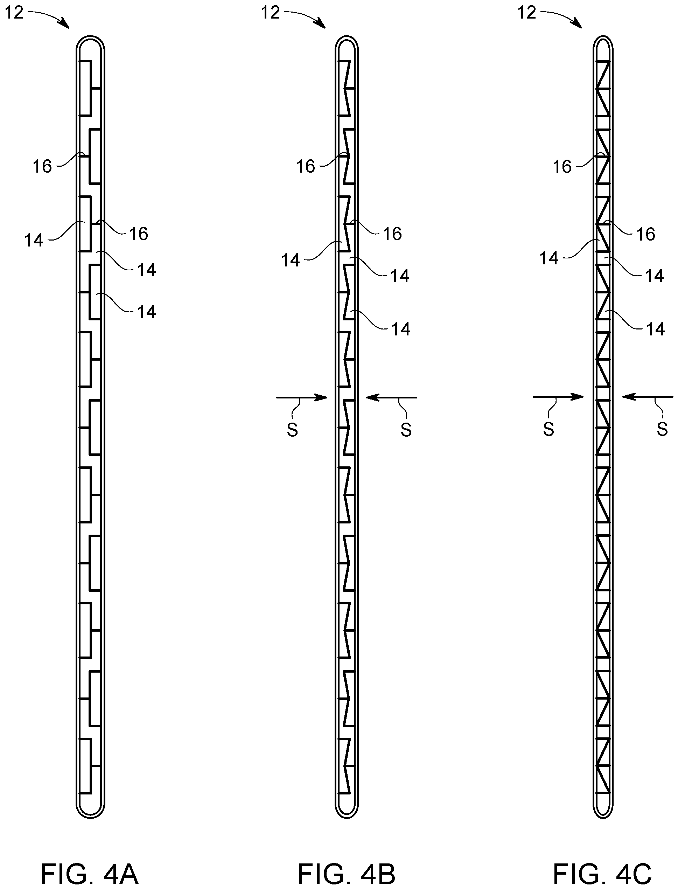

FIG. 2 is a schematic diagram illustrating a linear plastic (constant) force to displacement characteristic in the advantageous pressure range of a battery cell stack over the entire tolerance range of said cell stack according to an embodiment. The battery cell stack includes a deformation characteristic, which results in very similar compression forces independent of the battery cell stacks length deviations caused by production tolerances and/or swelling. As shown in FIG. 2, at a first section of relatively low stack lengths, a linear elastic force to displacement behavior may be envisaged. Then, at a second section of possible stack length deviations of the battery cell stack, the pre-tension of the battery cell stack is kept in a desired range (indicated by the rectangular box). In other words, a linear plastic deformation curve is achieved that keeps the force at a level which is independent of the possible length deviations of the battery cell stack by production tolerances and/or swelling. As the linear plastic deformation curve is constant, the compressing force remains substantially the same so that the pre-tension of the battery cells stack is kept constant, regardless of the length deviation of the battery cell stack. It must be noted, that the present disclosure is not limited to a strictly constant behavior of the linear plastic deformation curve. The linear plastic deformation curve may also be formed as a slightly increasing or decreasing slope such that the pre-tension of the battery cell stack is substantially kept in the desired range (indicated by the rectangular box). Slightly increasing or decreasing may refer to range in which the maximum force is at most 2.5 times the minimum force. In an embodiment, the maximum force is at most double the minimum force. As further shown in FIG. 2, at a third section of relatively high stack lengths, a progressive force and deflection behavior takes over to avoid a complete folding of the coolant chambers in the coolers of the battery cell stack (as shown in FIG. 4C).

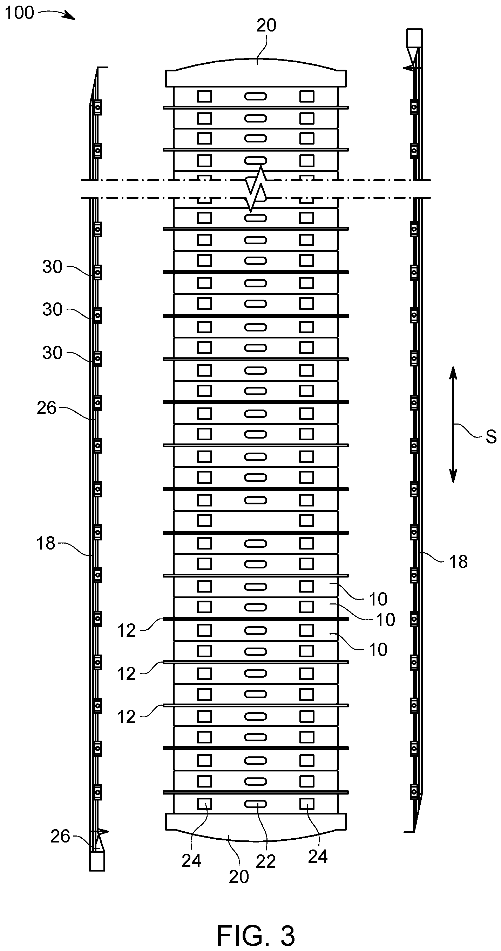

FIG. 3 shows a battery system 100 in a top view and without a top cover. The battery system 100 includes a plurality of battery cells 10 stacked along a stacking direction S (i.e. horizontal with respect to the image plane of FIG. 3). The battery cells 10 are exemplarily shown as prismatic battery cells 10. However, the present disclosure is not limited thereto and the battery cells 10 may also be of another type, e.g. of the pouch-type. Each of the plurality of battery cells 10 includes a venting valve 22 disposed between two electrode terminals 24 on a terminal side. The terminal sides of the battery cells 10 are arranged orthogonal to the stacking direction S, e.g. towards the top direction, i.e. the height direction, of the battery system 100. Each of the venting valves 22 and electrode terminals 24 are aligned with respect to each other to form a row of venting valves 22 and two rows of electrode terminals 24 along the stacking direction S. The electrode terminals 24 are disposed on opposite ends of the terminal side of the battery cells 10 with respect to a lateral direction orthogonal to the stacking direction S and the height direction, respectively.

The battery system 100 further includes at least one cooling plate 12 arranged between two adjacent battery cells 10 of the plurality battery cells 10 along the stacking direction S. As shown in FIG. 3, despite at the outermost battery cells 10, one cooling plate 12 is arranged next to every two battery cells 10. In other words, the battery system 100 includes a plurality of cooling plates 12, wherein one cooling plate 12 is arranged at every second battery cell 10 in a recurrent manner. However, the present disclosure is not limited thereto and a cooling plate 12 may be arranged between each pair of adjacent battery cells 10. For example, a cooling plate 12 may also only be arranged at every third or fourth battery cell 10. In one embodiment, the battery system 100 may include merely one cooling plate 12 for the plurality of battery cells 10.

Each of the cooling plates 12 includes a chamber 14 for cooling liquid with a deformation structure 16 configured to transfer compressive forces along the stacking direction S between opposite sides of the cooling plate 12 facing the adjacent battery cells 10. However, the present disclosure is not limited thereto and merely at least one or some of the cooling plates 12 may include such a chamber 14. The internal structure of the cooling plates 12 and the deformation structure 16 will be described in detail later on with respect to FIGS. 4A to 4C.

The battery system 100 further includes two coolant collectors 18 extending along the stacking direction S. The coolant collectors 18 are arranged on opposite sides of and adjacent to the plurality of battery cells 10 with respect to the lateral direction. The coolant collectors 18 are fluidly connected to the chamber 14 of each cooling plate 12 in an assembled state of the battery system 100. For intelligibility reasons, the coolant collectors 18 are shown in FIG. 3 as being spaced apart from the plurality of battery cells 10. The length of the coolant collectors 18 exceeds the combined length of the plurality of battery cells 10. In other words, the coolant collectors 18 encompass the plurality of battery cells 10 along the stacking direction S. As shown in FIG. 3, the cooling plates 12 extend further into the lateral direction than the plurality of battery cells 10. During assembly, the coolant collectors 18 may be moved towards the plurality of battery cells 10 to receive the protruding end sections of the cooling plates 12. In the assembled state, the coolant collectors 18 are fluidly connected with the chamber 14 of each of the cooling plates 12 via the protruding opposite end sections of the cooling plates 12. The coolant collectors 18 may each include a channel 26 for conducting cooling fluid. The channels 26 extends along the stacking direction S. The channels 26 are connected with the chambers 14 of the cooling plates 12, respectively. Each of the channels 26 leads to an outside of the respective coolant collector 18, e.g. connected to a reservoir for cooling liquid outside of the coolant collector 18. The coolant collectors 18 may each be made as a single piece and/or may each be made of or consist of a high-strength synthetic material such as fiber-reinforced plastic. The coolant collectors 18 may each be formed by injection molding or a series of molding and joining operations such as welding or gluing. However, the present disclosure is not limited to the described amount of coolant collectors 18. For example, the battery system 100 may include only one or more than two of the described coolant collectors 18.

As further shown in FIG. 3 the battery system 100 also includes two opposite end plates 20 arranged such that the plurality of battery cells 10 is encompassed between both end plates 20 along the stacking direction S. In the assembled state, the coolant collectors 18 are mechanically coupled to the end plates 20 in a load carrying manner. In other words, the end plates 20 and the coolant collectors 18 may set a specified or predetermined length of the plurality of battery cells 10 along the stacking direction S such that compressing forces along the stacking direction S may be caused due to length deviations of the battery cells 10. For example, the coolant collectors 18 may be used as part of a housing or frame of the battery system 100. The end plates 20 may be configured to provide a substantially even pressure distribution along the end surfaces of the plurality of battery cells 10 along the stacking direction S. For example, the end plates 20 may be configured to provide the substantially even pressure distribution through a convex outer shape with respect to the stacking direction S and a substantially flat inner shape contacting with the outermost battery cells 10 of the plurality of battery cells 10. In other words, a middle section of the end plates 20 may extend further away from the battery cells 10 along the stacking direction S than end sections of the end plates 20. Each of the end plates may be made as a single piece and/or may be made of or consist of a high-strength synthetic material such as fiber-reinforced plastic.

In order to prevent performances losses due to the compressing forces caused by length deviations of the battery cells 10, the deformation structures 16 of the cooling plates 12 are configured to equalize compressive forces caused by length deviations of the plurality of stacked battery cells 10 along the stacking direction S through deformation of at least a portion of the deformation structure 16 at a substantially constant force over a given displacement (as shown in FIG. 2). A possible embodiment of the battery system 100 of the present disclosure with a cooling plate 12 which incorporates the characteristics as shown in FIG. 2 is shown in FIGS. 4A to 4C, where different compression conditions resulting in different positioning of partition walls of the cooling plate 12 are shown.

FIG. 4A is a cross-sectional view of a cooling plate 12 according to an embodiment of the battery system 100 in a non-compressed state. In FIGS. 4B and 4C, a cross-sectional view of the cooling plate 12 of FIG. 4A is shown in a partially-compressed state and in a fully-compressed state, respectively.

As shown in FIG. 4A, the cooling plate 12 includes a plurality of chambers 14 for cooling liquid which are arranged between opposite (main) sides of the cooling plate 12. The plurality of chambers 14 is evenly distributed along a height direction of the battery cells 10. In this case, the compression pressure along the stacking direction S may be substantially distributed evenly between the area of the adjacent battery cells 10 in contact with the cooling plate 12 such that distortion of the battery cells 10 may be reduced or prevented such that corresponding reduction of the performance of the battery system 100 may be prevented.

The deformation structure 16 includes a plurality of partition walls between both opposite sides of the cooling plate 12 which do not provide a direct load path for transferring the compression forces. Instead, the partition walls of the deformation structure 16 each include at least one deflecting portion, i.e. in which at least a part of a partition wall of the deformation structure 16 deflects due to the compression force acting along the stacking direction S. In other words, a part of the compression force is used for deflection of the deformation structure 16, thereby mitigating and/or compensating a progressive force to displacement behavior. In other words, the deflection allows a movement or displacement path of the cooling plate 12 along the stacking direction S when a compression force caused by length deviations of the plurality of battery cells 10 along the stacking direction S acts on the cooling plates 12.

As shown in FIG. 4A, each chamber 14 is shaped as a cuboid, for example, extending along the cooling plate 12 between opposite end sections along the lateral direction of the cooling plate 12. A length of the chamber 14 along the stacking direction S is substantially half a length of the cooling plate 12 along the stacking direction S. A middle section of each of the chambers 14 with respect to the height direction is connected to the one of the opposite sides of the cooling plate 12 via a connection portion, respectively. The connecting portions provide a direct load path between the opposite side of the cooling plate 12 and the middle sections of the chambers 14.

When the cooling plate 12 of the present disclosure is compressed within an operational pressure range of the battery cells 10 along the stacking direction S, the compression pressure remains constant or increases linearly due to a plastic deformation of the deformation structure 16. As shown in FIG. 4B, the middle section of the chamber 14 is partially pressed into the chamber 14 by the connecting portion. The corresponding wall of the chamber 14 deflects such that the deformation structure 16 is configured to absorb compressive forces caused by length deviations of the plurality of battery cells 10. In the fully-compressed state (see FIG. 4C), the deflected wall of the chamber 14 is pressed by the connecting portion so as to be in contact with the other of the opposite sides of the cooling plate 12. In other words, the deflected wall contacts the side of the cooling plate 12 opposite to the connection portion in the fully-compressed state.

Advantageously, due to the plastic deformation of the deformation structure 16 of the cooling plates 12 length tolerances along the stacking direction S of the battery cells 10 may be compensated such that a simplicity in production may be achieved. Accordingly, no (or at least less) length and/or pressure adjustment along the stacking direction S is required and the plurality of battery cells 10 can be compressed and fixed at a standard size which will automatically result in the desired pressure, i.e. the desired pre-tension.

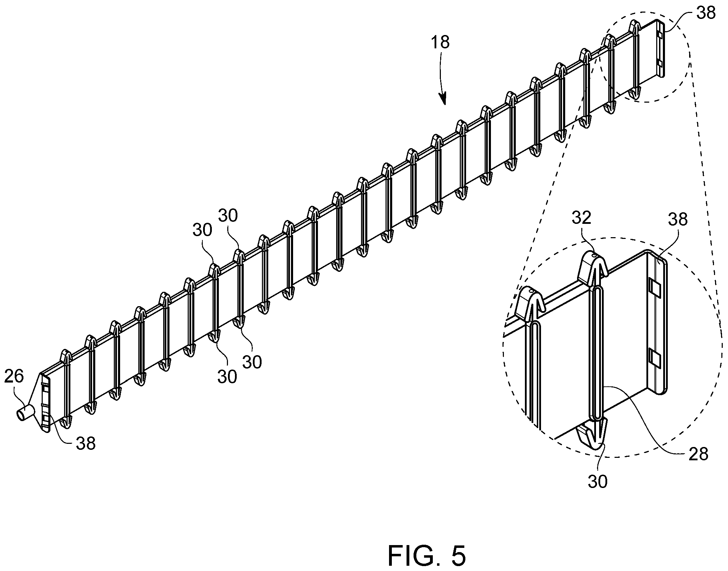

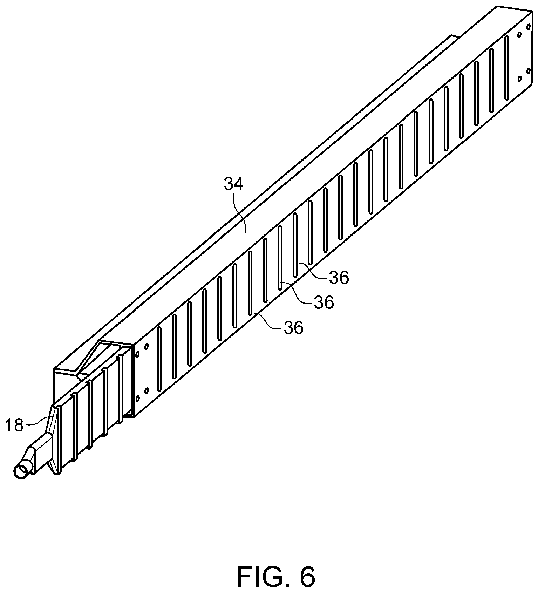

Referring to FIGS. 5 and 6, the structure of the coolant collectors 18 will now be described in detail.

FIG. 5 is a perspective view on a coolant collector 18 of the battery system 100. As best shown in the insert in Fig. 5 showing an end section of the coolant collector 18 in an enlarged view, the coolant collector 18 includes a plurality of circumferential grooves 28. Each of the circumferential grooves 28 is configured to receive an end section of one cooling plate 12 and to connect the chamber 14 of the cooling plate 12 to the channel 26 of the coolant collector 18. In other words, the coolant collector 18 includes one circumferential groove 28 for each cooling plate 12 of the battery system 100. The circumferential grooves 28 are arranged so as to correspond to the position of the cooling plates 12 in the assembled state of the battery system 100. The circumferential grooves 28 extend along a height direction of the battery cells 10. Accordingly, the end sections of each of the cooling plates 12 may be received and each of the chambers 14 of the cooling plates 12 may be fluidly connected to the channel 26 of the coolant collector 18.

As further shown in FIG. 5, at least one snap fit element 30 is arranged above and at least one snap fit element 30 is arranged below each of the grooves 28 of the coolant collector 18. The snap fit elements 30 are configured to mechanically connect the coolant collector 18 to a frame and/or a top or a top cover of the battery system 100. More specifically, the snap fit elements 30 are arranged directly above and directly below the groove 28 of the coolant collector 18. As mechanical loads from the battery cells 10 get transferred into the coolant collector 18 where the cooling plate 12 meets the coolant collector 18, it is advantageous to minimize the distance between the force input (cooling plate 18 received in the groove 28) to the force output (snap-fit element 30). However, the present disclosure is not limited to this arrangement of snap fit elements 30.

Each of the snap fit elements 30 includes a hole 32 connected to the groove 28 for inserting sealing material into the groove 28. The sealing material is easily arranged into the groove 28 via the hole 32. The sealing material may be applied from below into the hole 32 of the lower snap fit element 30. The sealing material then rises to the top of the groove 28, covering all of the end section of the cooling plate 12 and the coolant collector 18 along the groove 28, with excess sealing material exiting the groove 28 via the hole 32 in the upper snap fit element 30. Accordingly, introducing sealing material into the groove 28 via the holes 32 facilitates the appliance of sealing material to ensure long-term coolant tightness as well as mechanical cohesion of the battery system 100.

Furthermore, the coolant collector 18 includes latches 38 arranged at the opposite ends of the coolant collectors 18 with respect to the stacking direction S to mechanically connect the coolant collectors 18 to the end plates 20. The latches 38 are adapted to interlock with the end plates 20 and to retain a position of the coolant collectors 18 with respect to the end plates 20.

Another embodiment is described in view of FIG. 6 in which the battery system 100 further includes a frame with at least one hollow frame profile 34. The hollow frame profile 34 is illustrated in a perspective view on the coolant collector 18 of FIG. 5 arranged inside the hollow frame profile 34. The coolant collector 18 arranged inside the hollow frame profile 34 may be connected to the cooling plates 12 through openings 36 in the wall of the hollow frame profile 34 facing the plurality battery cells 10. As shown in FIG. 6, one opening 36 for each cooling plate 12 is included into the wall of the hollow frame profile 34. Each of the openings 36 may be shaped as a slit corresponding to the shape of the end sections of the cooling plates 12. For example, each of the coolant collectors 18 may be accommodated in a separate hollow frame profile 34. The accommodation of coolant collectors 18 inside the hollow frame profile 34 allows to clear space of the battery system 100 in order to decrease its size and/or to increase the energy density of the battery system 100. In an embodiment, two hollow frame profiles 34 are used to accommodate both of the coolant collectors 18 of the battery system 100 of FIG 3. Accordingly, the hollow frame profiles 34 are arranged on opposite sides with respect to the lateral direction of the plurality of battery cells 10.

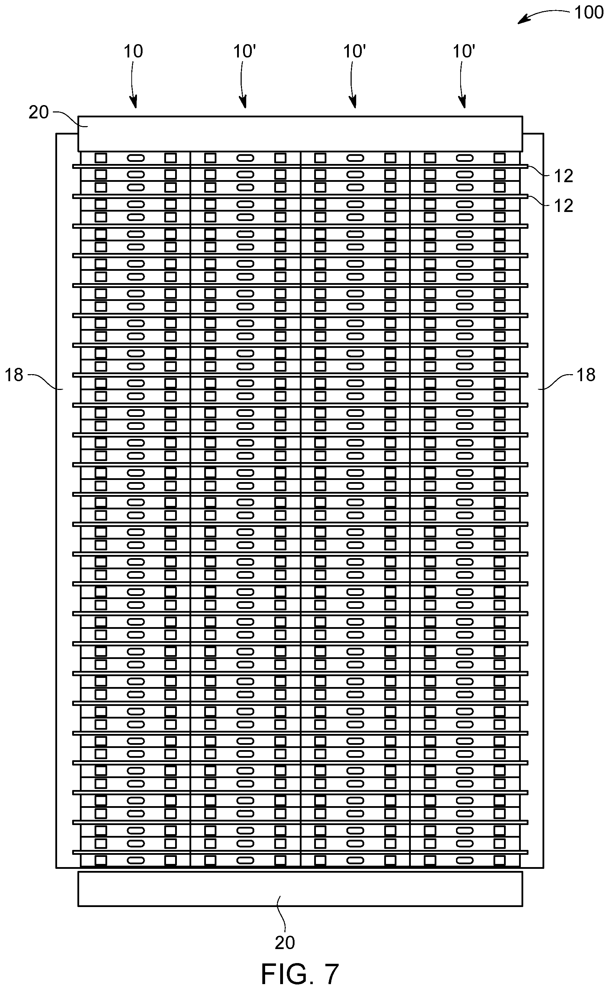

FIG. 7 illustrates a schematic top view on a battery system 100 according to another embodiment. In the following, a description of the features already described is omitted and merely the different features of this embodiment are explained in detail.

According this embodiment, the battery system 100 includes further pluralities of battery cells 10' along the stacking direction S. The plurality of battery cells 10 as described in view of the foregoing figures may be considered as first plurality of battery cells 10. Then the battery system 100 according to this embodiment may further include second to fourth pluralities of battery cells 10' with substantially the same features with respect to the first plurality of battery cells 10, for example. The first to fourth pluralities of battery cells 10, 10' may be regarded as first to fourth battery cell stacks which are disposed next to each other in a lateral direction. The end plates 20 may be configured to encompass each of the first to fourth pluralities of battery cells 10, 10' along the stacking direction S. In other words, multiple parallel battery cell stacks of the battery system 100 may be compressed together along the stacking direction S between one common pair of end plates to compress all of the battery cell stacks to the same length along the stacking direction S with the same pressure (at the same time). Differences due to tolerances of the battery cells 10, 10' may be compensated via the cooling plates 12. Accordingly, a reduction in performance of the battery system 100 due to battery cell length deviations does not occur. The chambers 14 of adjacent cooling plates 12 may be fluidly connected to each other to form a common fluid channel through the chambers 14 of the cooling plates 12 of the adjacent battery cell stacks. The common fluid channel may be connected to the coolant collectors 18.

### Reference signs

- 10, 10': battery cell
- 12: cooling plate
- 14: chamber
- 16: deformation structure
- 18: coolant collector
- 20: end plate
- 22: venting valve
- 24: electrode terminal
- 26: channel
- 28: groove
- 30: snap fit element
- 32: hole
- 34: hollow frame profile
- 36: opening
- 38: latch
- 100: battery system
- S: stacking direction

## Claims

1. A battery system (100), comprising:
a plurality of battery cells (10) stacked along a stacking direction (S) and
at least one cooling plate (12) arranged between two adjacent battery cells (10) of the plurality battery cells (10) along the stacking direction (S),
wherein the cooling plate (12) comprises a chamber (14) for cooling liquid with a deformation structure (16) configured to transfer compressive forces along the stacking direction (S) between opposite sides of the cooling plate (12) facing the adjacent battery cells (10),
wherein the deformation structure (16) is configured to equalize compressive forces caused by length deviations of the plurality of stacked battery cells (10) along the stacking direction (S) through deformation of at least a portion of the deformation structure (16) at a substantially constant force over a given displacement.

2. The battery system (100) according to claim 1, wherein the deformation structure (16) is configured to deform along the stacking direction (S) for at least 2.5 percent and/or for at most 10 percent of the length of a battery cell (10) at a substantially constant force over a given displacement.

3. The battery system (100) according to claim 1 or 2, wherein the cooling plate (12) comprises a plurality of the chambers (14) for cooling liquid evenly distributed between the opposite sides of the cooling plate (12) along a first direction perpendicular to the stacking direction (S).

4. The battery system (100) according to any one of the preceding claims, further comprising at least one coolant collector (18) extending along the stacking direction (S) and fluidly connected to the chamber (14) of the cooling plate (12).

5. The battery system (100) according to claim 4, further comprising two opposite end plates (22) arranged such that the plurality of battery cells (10) is encompassed between both end plates (22) along the stacking direction (S), wherein the coolant collector (18) is mechanically coupled to the end plates (22) in a load carrying manner.

6. The battery system (100) according to claim 4 or 5, wherein the coolant collector (18) comprises a channel (26) for conducting cooling fluid extending along the stacking direction (S) and a circumferential groove (28) for receiving an end section of the cooling plate (12) and for connecting the chamber (14) of the cooling plate (12) to the channel (26) of the coolant collector (18).

7. The battery system (100) according to claim 6, wherein an end section of the cooling plate (12) is received in the circumferential groove (28) of the coolant collector (18) and the circumferential groove (28) is filled with a sealing material for sealing the fluid connection between the chamber (14) of the cooling plate (12) and the channel (26) of the coolant collector (18).

8. The battery system (100) according to claim 7, wherein the stiffness of the cooling plate (12) at the end section is higher than at a section interposed between the adjacent battery cells (10).

9. The battery system (100) according to any one of claims 4 to 8, wherein the coolant collector (18) comprises snap fit means arranged at a lower ridge and/or upper ridge of the coolant collector (18) and configured to be connectable to a frame and/or a top cover of the battery system (100).

10. The battery system (100) according to claim 9, wherein a snap fit element (30) is arranged above and/or below the groove (28) of the coolant collector (18).

11. The battery system (100) according to claim 10, wherein the snap fit element (30) arranged above and/or below the groove (28) of the coolant collector (18) comprises a hole (32) connected to the groove (28) for inserting sealing material into the groove (28).

12. The battery system (100) according to any one of claims 4 to 11, further comprising a frame with at least one hollow frame profile (34), wherein the coolant collector (18) is arranged inside the hollow frame profile (34) and connected to the cooling plate (12) through an opening (36) in the wall of the hollow frame profile (34).

13. The battery system (100) according to any one of the claims 5 to 12, insofar as referring to claim 5, further comprising another plurality of battery cells (10') stacked along the stacking direction (S) disposed next to the plurality of battery cells (10), wherein the end plates (22) are configured to encompass both pluralities of battery cells (10, 10') along the stacking direction (S), and wherein the chambers (14) of adjacent cooling plates (12) are fluidly connected to each other.

14. An electric vehicle comprising the battery system (100) according to any one of the preceding claims.

15. A cooling plate (12) for a battery system (100) comprising a plurality battery cells (10) stacked along a stacking direction (S), comprising
a chamber (14) for cooling liquid with a deformation structure (16) configured to transfer compressive forces between opposite sides of the cooling plate (12),
wherein the deformation structure (16) is configured to equalize compressive forces causable by length deviations of stacked battery cells (10) along the stacking direction (S) through deformation of at least a portion of the deformation structure (16) at a substantially constant force over a given displacement.

## Amended claims

### Amended claims in accordance with Rule 137(2) EPC.

1. A battery system (100), comprising:
a plurality of battery cells (10) stacked along a stacking direction (S) and
at least one cooling plate (12) arranged between two adjacent battery cells (10) of the plurality of battery cells (10) along the stacking direction (S),
wherein the cooling plate (12) comprises a chamber (14) for cooling liquid with a deformation structure (16) configured to transfer compressive forces along the stacking direction (S) between opposite sides of the cooling plate (12) facing the adjacent battery cells (10),
wherein the deformation structure (16) is configured to equalize compressive forces caused by length deviations of the plurality of stacked battery cells (10) along the stacking direction (S) through deformation of at least a portion of the deformation structure (16) along the stacking direction (S) for at most 10 percent of the length of a battery cell (10) at a constant force over a given displacement,
wherein the battery system (100) further comprises:
at least one coolant collector (18) extending along the stacking direction (S) and fluidly connected to the chamber (14) of the cooling plate (12) and
a frame with at least one hollow frame profile (34), wherein the coolant collector (18) is arranged inside the hollow frame profile (34) and connected to the cooling plate (12) through an opening (36) in the wall of the hollow frame profile (34).

2. The battery system (100) as claimed in claim 1, wherein the deformation structure (16) is further configured to deform along the stacking direction (S) for at least 2.5 percent of the length of a battery cell (10) at a constant force over a given displacement.

3. The battery system (100) as claimed in claim 1 or 2, wherein the cooling plate (12) comprises a plurality of chambers (14) for cooling liquid evenly distributed between the opposite sides of the cooling plate (12) along a first direction perpendicular to the stacking direction (S).

4. The battery system (100) as claimed in any one of the preceding claims, further comprising two opposite end plates (20) arranged such that the plurality of battery cells (10) is encompassed between both end plates (20) along the stacking direction (S), wherein the coolant collector (18) is mechanically coupled to the end plates (20) in a load carrying manner.

5. The battery system (100) as claimed in any one of the preceding claims, wherein the coolant collector (18) comprises a channel (26) for conducting cooling fluid extending along the stacking direction (S) and a circumferential groove (28) for receiving an end section of the cooling plate (12) and for connecting the chamber (14) of the cooling plate (12) to the channel (26) of the coolant collector (18).

6. The battery system (100) as claimed in claim 5, wherein an end section of the cooling plate (12) is received in the circumferential groove (28) of the coolant collector (18) and the circumferential groove (28) is filled with a sealing material for sealing the fluid connection between the chamber (14) of the cooling plate (12) and the channel (26) of the coolant collector (18).

7. The battery system (100) as claimed in claim 6, wherein the stiffness of the cooling plate (12) at the end section is higher than at a section interposed between the adjacent battery cells (10).

8. The battery system (100) as claimed in any one of the preceding claims, wherein the coolant collector (18) comprises snap fit means arranged at a lower ridge and/or upper ridge of the coolant collector (18) and configured to be connectable to a frame and/or a top cover of the battery system (100).

9. The battery system (100) as claimed in claim 8, wherein a snap fit element (30) is arranged above and/or below the groove (28) of the coolant collector (18).

10. The battery system (100) as claimed in claim 9, wherein the snap fit element (30) arranged above and/or below the groove (28) of the coolant collector (18) comprises a hole (32) connected to the groove (28) for inserting sealing material into the groove (28).

11. The battery system (100) according to any one of the claims 4 to 10, insofar as referring to claim 4, further comprising another plurality of battery cells (10') stacked along the stacking direction (S) disposed next to the plurality of battery cells (10), wherein the end plates (20) are configured to encompass both pluralities of battery cells (10, 10') along the stacking direction (S), and wherein the chambers (14) of adjacent cooling plates (12) are fluidly connected to each other.

12. An electric vehicle comprising the battery system (100) as claimed in any one of the preceding claims.
